# EUROPEAN PATENT SPECIFICATION

(11) **EP 3 054 468 B1**
(45) Date of publication and mention of the grant of the patent: **02.01.2019**
(21) Application number: 14848663.2
(22) Date of filing: 29.09.2014
(51) Int. Cl.: H01G 9/15, H01G 13/00, H01G 9/008, H01G 9/00, H01G 9/10

(54) **METHOD FOR MANUFACTURING TAB TERMINAL FOR ELECTROLYTIC CAPACITOR**
VERFAHREN ZUR HERSTELLUNG EINES FLACHSTECKERANSCHLUSSES FÜR EINEN ELEKTROLYSEKONDENSATOR
PROCÉDÉ DE PRODUCTION D'UNE BORNE À LANGUETTE POUR UN CONDENSATEUR ÉLECTROLYTIQUE

(30) Priority: 30.09.2013 JP 2013205404
(43) Date of publication of application: 10.08.2016
(73) Proprietor: Kohoku Kogyo Co., Ltd., Nagahama-shi, Shiga 529-0241 (JP)
(72) Inventor: ISHII Futoshi, Nagahama-shi Shiga 529-0241 (JP); YOSHIZAWA Shuhei, Nagahama-shi Shiga 529-0241 (JP); ARAKI Haruhito, Nagahama-shi Shiga 529-0241 (JP)
(74) Representative: Hoffmann Eitle
(86) International application number: PCT/JP2014/075900
(87) International publication number: WO 2015/046515

(56) References cited:
- EP-A1- 2 490 234
- WO-A1-2009/107177
- WO-A1-2011/045971
- JP-A- H06 181 150
- JP-A- 2002 151 456
- JP-A- 2007 220 804
- JP-A- 2010 022 902
- US-A1- 2012 267 161

## Description

### Technical Field

The present invention relates to a method for manufacturing a tab terminal for use in electrolytic capacitors which comprises a lead wire with a lead-free tin-plated surface and more specifically relates to a tab terminal manufacturing method which allows production of a tab terminal comprising a lead wire and an aluminum core wire wherein whiskers are hard to produce from a weld zone between the wires.

### Background Art

Electrolytic capacitors are produced by winding an anode electrode foil and a cathode electrode foil each comprising a metal having valve action, such as tantalum or aluminum, through a separator to form a capacitor element, holding a liquid electrolyte or a solid electrolyte in the capacitor element, and housing the assembly in an outer casing. Tab terminals for connecting the respective electrodes to the outside are joined to the anode electrode foil and the cathode electrode foil, respectively, by known means such as stitch bonding or ultrasonic welding.

A tab terminal for an electrolytic capacitor has a structure comprising an aluminum core wire having a press flattened portion and a lead wire welded to each other. The tab terminal in its portion to be jointed to the electrode foil is pressed to constitute a press flattened portion which is wound within a winding-type capacitor element. On the other hand, the portion to be inserted through a sealed body that hermetically seals an outer case is formed of an aluminum core wire from the viewpoints of ensuring sealing between the portion and the sealed body and mechanical strength. A lead-out portion mounted on a circuit board is formed of a flexible lead wire from the viewpoint of ensuring handleability in mounting.

The tab terminal composed of the three portions is generally prepared by welding two members to each other. Specifically, the tab terminal is prepared by welding a lead wire to an aluminum core wire with a press flattened portion. An electrolytic capacitor is mounted on a circuit board with solder, and, hence, for solderability improvement purposes, a lead wire having in its surface a tin plating or a lead-containing tin plating is used.

On the other hand, in recent years, in consideration of environmental problems, the development of techniques using lead-free solder for freeing of lead in electrode terminals of electronic components or for joining of electronic components has become undertaken. Also in a lead wire for use as electronic members, instead of a conventional lead-containing tin plating, a tin plating not using lead, that is, the so-called "lead-free tin plating," has become used. Tab terminals using the above lead wire with a lead-free tin plating suffer from a problem of the production of tin whiskers at the weld between the aluminum core wire part and the lead wire part. Since tin whisker grows with the elapse of time, even when the whisker is removed after the production of the tab terminal, the whisker grows gradually after the removal of the whisker. Therefore, after mounting of the electrolytic capacitor onto a circuit board, whiskers produced from the anode-side lead wire are joined to whiskers produced from the cathode-side lead wire, or the whisker produced in the lead wire part reaches the surface of the circuit board, leading to a fear of increasing leakage current of the electrolytic capacitor and causing shortcircuiting.

Regarding these problems, in order to prevent the production of tin whiskers from the weld, Japanese Patent Application Laid-Open No. 67146/2007 (patent document 1) proposes a technique in which a heat curable resin composition is coated onto a portion in the vicinity of a weld zone from which whiskers are produced followed by heat treatment to cover the vicinity of the weld zone with a resin. Since, however, heat curable resins typified by epoxy resins and the like generally contain halogens such as chlorine, the above technique may pose an environmental problem in a tab terminal manufacturing process or in the disposal of electronic materials such as capacitors using tab terminals. Accordingly, in manufacturers of capacitors, there is a demand for environmentally friendly halogen-free electronic members. For example, WO 2011/045971 (patent document 2) proposes a technique in which an acrylic ultraviolet curable resin is coated onto a portion in the vicinity of a weld zone from which whiskers are produced, and then cured, thereby making it possible to suppress the growth of whiskers from the portion in the vicinity of the weld zone.

Japanese Patent Application Laid-Open No. 168775/1996 (patent document 3) proposes a technique in which a sedimentation agent comprising a magnetic body is added to a waste liquid to form an aggregate of the sedimentation agent and a solid component contained in the waste liquid followed by removal of the aggregate by a magnetic filter (patent document 2). European Patent Application EP 2 490 234 A1 (patent document 4) proposes a technique wherein an aluminum core is welded wire to a lead wire, a composition for an UV cured resin is coated onto a portion in the vicinity of the weld zone and the resin composition is cured afterwards by UV irradiation to form a covering in order to suppress whisker growth. Japanese Patent Application Laid-Open No. 220804/2007 (patent document 5) discloses a method for manufacturing a tab terminal wherein the tab terminal is cleaned with a phosphorous-based solvent in order to form a phosphorous compound film on the surface of the welded portion and thereby avoiding the occurrence of whiskers. Japanese Patent Application Laid-Open No. 151456/2002 (patent document 6) relates to a method for manufacturing an electrophotographic photosensitive member and further discloses a cleaning apparatus for a conductive substrate having a cleaning tank and comprising a magnetic filter in contact with the cleaning solution to remove trace amounts of metal powder present in the cleaning solution. United States Patent Application US 2012/267161 A1 (patent document 7) proposes a technique of submitting an electronic component to a washing step with an alkaline cleaning agent to remove tin existing on the surface layer of the welded section and delay the generation of whiskers.

### Prior Art Document

### Patent Document

Patent document 1: Japanese Patent Application Laid-Open No. 67146/2007
Patent document 2: WO 2011/045971
Patent document 3: Japanese Patent Application Laid-Open No. 168775/1996
Patent document 4: European Patent Application EP 2 490 234 A1
Patent document 5: Japanese Patent Application Laid-Open No. 220804/2007
Patent document 6: Japanese Patent Application Laid-Open No. 151456/2002
Patent ducoment 7: United States Patent Application US 2012/267161 A1

### DISCLOSURE OF THE INVENTION

### Problems to be Solved by the Invention

Covering of a weld zone with a resin can suppress the growth of whiskers from the weld zone with the elapse of time as described, for example, in patent documents 1 and 2. Whiskers, however, might grow breaking through the resin film or grow from a weld zone with an incomplete resin film. The present inventors have now found that the steps of washing with a specific solvent a joined body comprising a lead wire and an aluminum core wire that are welded to each other, removing by a magnetic filter a metallic compound contained in the solvent after washing, and covering with a resin a portion in the vicinity of the weld zone of the joined body after washing can realize the suppression of the production of whiskers and, at the same time, can realize tab terminals environmentally friendly after welding. The present invention has been made based on such finding.

Accordingly, an object of the present invention is to provide a tab terminal that, even when a lead-free tin-plated lead wire as such is used in a tab terminal, does not produce tin whiskers from a weld zone and is environmentally friendly, and a method for producing the same.

Another object of the present invention is to provide a terminal for electronic parts, with excellent joining strength, which is obtained by the manufacturing method and is substantially free from an intermetallic compound on a joining interface between copper and aluminum.

### Means for Solving the Problems

The method for manufacturing a terminal for electronic parts in the present invention is defined in claim 1. The method is a method for manufacturing a tab terminal for an electrolytic capacitor comprising: a lead wire having a lead-free tin-plated surface; and an aluminum core wire that has a press flattened portion and is welded to the lead wire,
wherein the method comprises the steps of :
joining one end of the aluminum core wire and one end of the lead wire by welding to form a joined body;
washing the joined body in a washing tank with a washing solution containing an inorganic acid salt as a washing component;
coating a composition for an ultraviolet cured resin onto the weld zone of the washed joined body; and
irradiating the coated portion with ultraviolet light to form a covering of the ultraviolet cured resin, and
characterized in that the washing solution is circulated through a magnetic filter in the washing tank, and that an alloy or intermetallic compound of Fe and a metal from the group consisting of Cu, Sn, Al, Bi and Ni,which has been produced by washing of the joined body, is removed by the magnetic filter.

In an embodiment of the present invention, preferably, the covering is provided at a weld padding portion.

In an embodiment of the present invention, preferably, the ultraviolet cured resin is substantially free from a halogen.

In an embodiment of the present invention, preferably, the ultraviolet cured resin is a copolymer resin composed mainly of a urethane acrylate and a (meth)acrylate.

In an embodiment of the present invention, preferably, the ultraviolet cured resin contains 45 to 55% by mass of the urethane acrylate and 35 to 45% by mass of the (meth)acrylate.

In an embodiment of the present invention, preferably, the composition for an ultraviolet cured resin comprises an anaerobic curing accelerator.

In an embodiment of the present invention, preferably, the composition for an ultraviolet cured resin further comprises a solvent containing an inorganic acid salt selected from the group consisting of borates, condensed phosphates, bicarbonates, carbonates, silicates, sulfates, and a mixture of them.

In an embodiment of the present invention, preferably, an inorganic acid salt selected from the group consisting of borates, silicates, sulfates, phosphates, and a mixture of them is contained as a washing component in the washing tank.

According to a further aspect of the present invention, there are provided a tab terminal obtained by the manufacturing method of the present invention, and an electrolytic capacitor using the tab terminal.

In the present invention, since the surface of a weld zone that is located between an aluminum core wire and a lead wire and is a whisker production site, is covered with a resin, the growth of tin whiskers from the weld zone with the elapse of time can be suppressed. Further, the use of an ultraviolet cured resin as the resin can realize a tab terminal that is substantially free from halogens and thus is environmentally friendly.

### BRIEF DESCRIPTION OF THE DRAWING

Fig. 1 is a schematic view of a tab terminal for an electrolytic capacitor obtained by the manufacturing method according to the present invention.
Fig. 2 is a schematic view showing the washing step in the manufacturing method according to the present invention.
Fig. 3 is a schematic cross sectional view of a magnetic filter used in the manufacturing method of the present invention.

### BEST MODE FOR CARRYING OUT THE INVENTION

The method for manufacturing a tab terminal according to the present invention will be described with reference to the accompanying drawing. The tab terminal manufacturing method according to the present invention comprises the steps of: 1) joining one end of an aluminum core wire and one end of a lead wire by welding to form a joined body; 2) washing the joined body in a washing tank with a washing solution containing an inorganic acid salt as a washing component; coating a composition for an ultraviolet cured resin onto a weld zone of the washed joined body; and irradiating the coated portion with ultraviolet light to form a covering of the ultraviolet cured resin. Hereinafter, the respective steps will be described.

### <Joined body forming step>

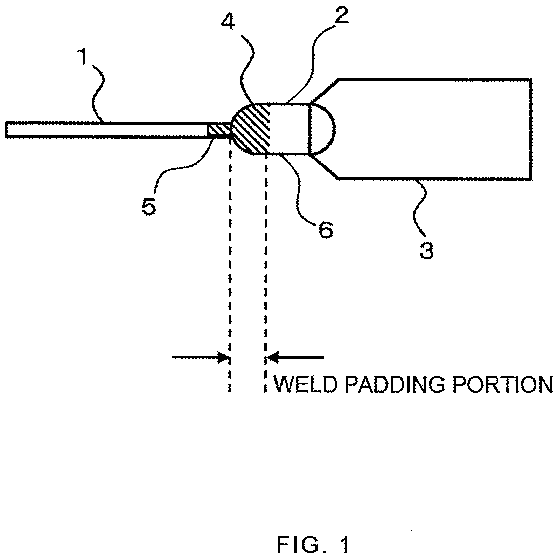

As shown in Fig. 1, the tab terminal for an electrolytic capacitor has a structure comprising a lead wire 1 with a lead-free tin-plated surface and an aluminum core wire 2 that are welded to each other. The aluminum core wire 2 functions as an aluminum electrode part (portion around which a foil is wound) after production of a tab terminal. The aluminum electrode part 3 is formed by cutting a wire material made of aluminum into a predetermined length, thereafter joining the aluminum wire material with a lead wire cut into a predetermined length by welding, and molding the head portion of the aluminum
wire material into a flat form by pressing. The step of cutting the press flattened portion into a predetermined shape can be carried out simultaneously with pressing. Usable aluminum core wires are those which are used in conventional tab terminals, and commercial aluminum core wires may also be used.

A copper wire or CP wire (a lead-in wire) having a lead-free tin-plated surface is used as the lead wire 1. A wire of iron with copper formed on the circumference thereof or a copper wire per se is usually used as a CP wire, from the viewpoint of electrical conductivity characteristics. An end of the lead wire, which is to be welded, is preferably molded into a tapered shape. The tapered shape can be a wedge or conical shape. The tip end angle of the lead wire tip end portion molded into a tapered shape preferably ranges from 30° to 90°, and more preferably ranges from 55° to 65°. A sharp tip end angle of below 30° makes processing difficult, whereas a tip end angle of above 90° causes bending of the lead tip end portion when the lead wire is pressed and welded to the aluminum electrode, whereby the lead wire may be welded deviating from the center of the aluminum electrode. Further, in the case of a wedge shape, the ridge line of the tip end of the wedge makes an angle ranging from 3° to 90°, preferably an angle ranging from 35° to 85°, with the axial direction of the lead wire. Thus, the tip end portion of the lead wire has a sharp angle so that electric discharge is preferably carried out during welding.

Next, one end 5 of the lead wire 1 and one end 4 of the aluminum core wire 2 are joined to each other by welding to form a joined body. Conventionally-known welding methods can be used. For example, they can be joined to each other, for example, by creating a high temperature state, for example, through spark discharge or plasma discharge, melting both the end of the aluminum core wire and the end of the lead wire and joining them to each other.

### <Joined body washing step>

The thus-obtained joined body is then subjected to a washing step. The washing step is conducted by washing the joined body in a washing tank with a washing solution containing an inorganic acid salt as a washing component. The washing tank to be used is made of stainless or the like, and contains a washing solution. A usable washing solution is one used in the production of conventional tab terminals. For example, washing solutions containing as a washing component an inorganic acid salt such as borates, silicates, sulfates or phosphates can suitably be used. Examples of borates
include sodium borate and potassium borate. Examples of silicates include sodium silicate, sodium polysilicate, potassium silicate and potassium polysilicate. Examples of sulfates include sodium sulfate and potassium sulfate. Also, examples of phosphates include sodium phosphates or potassium phosphates, sodium polyphosphates and potassium polyphosphates. Examples of sodium polyphosphates include sodium tripolyphosphate, sodium tetrapolyphosphate and sodium pentapolyphosphate, and, among these sodium polyphosphates, sodium tripolyphosphate is especially preferred. Among these inorganic acid salts, a phosphate or silicate is preferably contained in the washing solution. The washing component (inorganic acid salt) is preferably contained, in an amount of 1 to 50% by mass, preferably 10 to 40% by mass, especially 25 to 30% by mass, in a solvent. Examples of such a washing agent can include NEW CLEANER, LIOMIX series and SUNWASH series (all produced by Lion Corporation). The washing temperature ranges from 70° to 100°C, more preferably from 90° to 98°C.

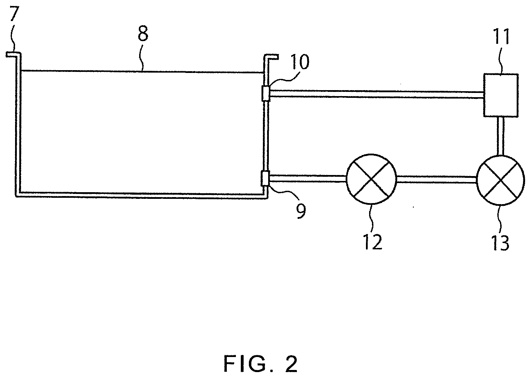

In the above washing tank, a washing solution 8 is cyclically utilized as shown in Fig. 2, and filters 12 and 13 are provided so as to remove washed foreign substances for a period between the time when the washing solution 8 is discharged from an discharge port 9 of the washing tank 7 and the time when the washing solution 8 is returned to an introduction port 10 by a forced circulation pump 11. The present invention is characterized in that, during cyclic utilization of the washing solution 8, a specific component is removed through the magnetic filter 12. In the above joining step, a part of the molten lead wire or aluminum core wire may sometimes be adhered, in the form of fine particles, to the surface of the joined body during welding. The lead wire and aluminum core wire used for welding are preliminarily washed and then subjected to the welding step. However, the lead wire and aluminum core wire may sometimes be insufficiently washed at that time, or foreign substances may sometimes be adhered to their surfaces during conveyance after washing. To prevent inclusion of these foreign substances, the joined body obtained by welding has conventionally been washed in a washing tank with a washing solution containing an inorganic acid salt as a washing component. The present inventors have found that foreign substances, which were dissolved or dispersed in a washing solution during washing and could not sufficiently be removed by a filter, are adhered to the surface of a joined body and serve as nuclei of whiskers to be produced. From analysis of the foreign substances, it has been revealed that alloys or intermetallic compounds of lead wire-derived iron (Fe) and other metals such as copper, tin, aluminum, bismuth or nickel are adhered, as foreign substances, to the surface of a joined body, and that these foreign substances accelerate the production of whiskers. In the present invention, the above foreign substances, which could not sufficiently be removed by a conventional filter, are removed by a magnetic filter, thereby making difficult the production of whiskers from a weld zone of the resultant tab terminal.

While a washing tank made of stainless or the like can be used, the phosphate-based washing solution as described above dissolves stainless though in a quite minor amount. Therefore, the used washing solution would contain iron ions, and the iron ions may be reacted with the other metals adhered to a joined body to form intermetallic compounds. Such intermetallic compounds would also accelerate the production of whiskers from a tab terminal. Such intermetallic compounds can also be removed by a magnetic filter in the present invention.

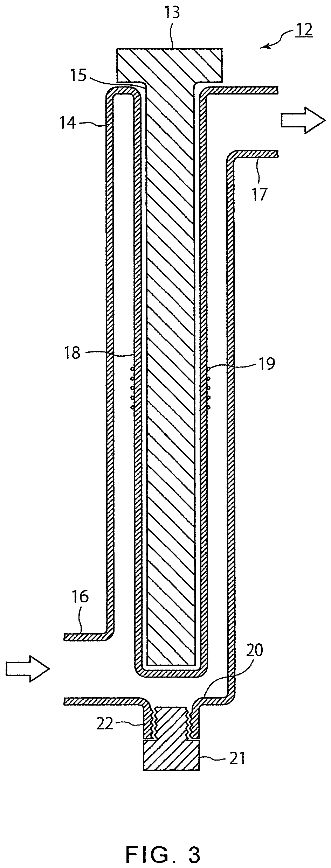

Fig. 3 is a cross sectional view of one embodiment of the magnetic filter 12 used in the present invention. The magnetic filter 12 is composed of a magnet 13 and a cylindrical dual container 14 into which the magnet 13 is inserted, and is configured so that the magnet 13 is freely inserted/removed from an upper opening 15 of the dual container. The used washing solution flows into the dual container 14 through an inflow port 16 provided in a lower side surface of the container, and the washing solution from which foreign substances have been removed is discharged through a discharge port 17 provided an upper side surface of the dual container 14. When the used washing solution passes through the inside of the dual container 14, the foreign substances in the washing solution are adhered to an internal surface side 18 of the dual container due to the magnetic action, and separated from the washing solution. The removed foreign substances 19 are dropped onto a bottom surface 20 of the dual container 14 by removing the magnet 13 through the opening 15 of the dual container 14, and can be discharged from a drain 22 by detaching from the dual container 14 a drain valve 21 which is provided on the bottom surface 20.

Another filter 13 may be provided in addition to the magnetic filter 12, as shown in Fig. 2, in the present invention. For example, a filter such as a filter paper can be provided in a circulation flow path of the washing tank. The filter paper may be provided on either of the upstream and downstream sides of the magnetic filter.

### <Ultraviolet curable resin covering step>

After the thus-washed joined body is dried, a composition for an ultraviolet cured resin is coated onto a portion in the vicinity of a weld zone of the joined body, and the coated portion is irradiated with ultraviolet light to cure the composition, thereby forming a covering. Here the "vicinity portion" means that, as shown in Fig. 1, not only a weld padding portion formed by welding between the lead wire 1 and the aluminum core wire 2 but also the end 5 of the lead wire and an aluminum core wire portion 6 extended from the weld padding portion may be covered with the resin. In the tab terminal using the lead wire 1 plated with lead-free tin is likely to cause the growth of whiskers from weld padding vicinity portions (4 to 6), and, thus, preferably, the weld padding portion is covered with the resin.

The weld padding portion of the tab terminal may be coated with the ultraviolet curable resin composition by any known method without particular limitation. For example, a method may be adopted in which an ultraviolet curable resin composition is coated by roller coating or spray coating. For some coating methods applied, the viscosity of the ultraviolet curable resin composition should be properly modified. The viscosity may be generally modified by regulating the content of a solvent although the method varies depending upon the monomer or oligomer selected. Further, when the weld zone of the tab terminal is coated with the resin composition by the above coating method, the viscosity of the resin composition should be properly modified so that the desired area is covered with the resin. For example, when a roller coating method is used, the viscosity of the ultraviolet curable resin composition adopted is approximately 5,000 to 30,000 mPa·s.

After the ultraviolet curable composition is coated onto the weld padding portion of the tab terminal, the coated portion is irradiated with ultraviolet light. The ultraviolet irradiation may be carried out with a known apparatus. An ultraviolet irradiation apparatus having an irradiation wavelength range of approximately 250 nm to 450 nm may be used although the apparatus used varies depending upon the type of a photopolymerization initiator added into the composition. Upon the exposure to ultraviolet light, the ultraviolet curable resin composition starts to polymerize and is cured with high sensitivity and in a very short time to form a resin covering. When a conventional epoxy resin is used, the provision of a heat treatment step is necessary in which, after coating of the resin composition onto the tab terminal, the coated tab terminal is heated. By contrast, according to the present invention, the heat treatment step is not necessary, and thus the steps are also simplified. Further, an anaerobic curing accelerator and a curing catalyst may be used in combination with the ultraviolet curable composition to further shorten the resin curing time. When such resin composition is used, a fast drying and uniform resin film can be obtained.

In the present invention, the covering of the ultraviolet cured resin is formed by irradiating an ultraviolet curable resin composition comprising an urethane acrylate and an (meth)acrylate as main components with ultraviolet light to cure the resin composition.

Urethane acrylates include, but are not limited to, polyester urethane acrylates, polyether urethane acrylates, polybutadiene urethane acrylates, and polyol urethane acrylates. The urethane acrylate to be used is an oligomer having a molecular weight range of approximately 500 to 20,000, preferably approximately 500 to 10,000. The content of the urethane acrylate in the ultraviolet curable resin composition is preferably 45 to 55% by mass.

The (meth)acrylate contained in the ultraviolet curable resin composition means an acrylate or a methacrylate, and (meth)acrylates include, but are not limited to, for example, ethylene glycol di(meth)acrylate, propylene glycol di(meth)acrylate, butylene glycol di(meth)acrylate, neopentyl glycol di(meth)acrylate, hexanediol (meth)acrylate, trimethylolethane di(meth)acrylate, trimethylolethane tri(meth)acrylate, pentaerythritol tri(meth)acrylate, pentaerythritol tetra(meth)acrylate, pentaerythritol penta(meth)acrylate, pentaerythritol hexa(meth)acrylate, and glyceryl tri(meth)acrylate. The content of the (meth)acrylate in the ultraviolet curable resin composition is preferably 35 to 45% by mass.

A photopolymerization initiator may be contained in the ultraviolet curable resin composition. The photopolymerization initiator absorbs ultraviolet light, for example, in a wavelength range of approximately 250 nm to 450 nm and generates radicals or ions to start polymerization of the oligomer and monomer. Photopolymerization initiators include, but are not limited to, for example, benzoin methyl ether, benzoin ethyl ether, isopropyl benzoin ether, isobutyl benzoin ether, 1-phenyl-1,2-propanedione-2-(o-ethoxycarbonyl)oxime, benzyl, diethoxyacetophenone, benzophenone, chlorothioxanthone, 2-chlorothioxanthone, isopropylthioxanthone, 2-methylthioxanthone, polyphenyl polychloride, and hexachlorobenzene. Preferred are isobutyl benzoin ether and 1-phenyl-1,2-propanedione-2-(o-ethoxycarbonyl)oxime. Commercially available photopolymerization initiators can also be used, such as those available under the trade names, e.g., Vicure 10 and 30 (produced by Stauffer Chemical Co.), Irgacure 184, 651, 2959, 907, 369, 1700, 1800, 1850 and 819 (produced by Ciba Specialty Chemicals, Inc.), Darocure 1173 (produced by EM Chemical), Quantacure CTX and ITX (produced by Aceto Chemical Co.), and Lucirin TPO (produced by BASF). The content of the polymerization initiator can be defined as 0.5 to 5.0% by mass based on the ultraviolet curable resin composition.

The ultraviolet curable resin composition comprising the urethane acrylate and the (meth)acrylate as main components is free from halogens such as chlorine and, thus, even when used for covering of a portion in the vicinity of a weld zone of the tab terminal, does not cause an environmental problem, and can effectively suppress the production of whiskers from the tab terminal. Commercially available compositions may be used as the ultraviolet curable resin composition, and examples of suitable commercially available compositions include Chemiseal U-426 (produced by Chemitech) and Acetite AS-2016 (produced by ASEC).

In the present invention, preferably, the ultraviolet curable resin composition may further contain an inorganic acid salt selected from the group consisting of borates, condensed phosphates, bicarbonates, carbonates, silicates, sulfates, and a mixture of them. When the inorganic acid salt-containing ultraviolet curable resin composition is used, the production of whiskers can be more effectively suppressed. Among the above inorganic acid salts, for example, salts of ammonium borate, ammonium phosphate, sodium borate and sodium phosphate can suitably be used. Commercially available inorganic acid salts may be used, and examples of suitable commercially available inorganic acid salts include Fine Cleaner FC315 and FC-E3017 (produced by NIHON PARKERIZING CO., LTD.). The content of the inorganic acid salt is 0.1 to 5% by mass, preferably 0.5 to 2% by mass.

In the tab terminal, microvoids having a depth of about 50 µm are present on the surface of a weld zone (a weld padding portion) between the lead wire and the aluminum core wire. When the ultraviolet curable resin composition is coated in the weld zone of the tab terminal and the portion in the vicinity of the weld zone followed by curing of the coating, the microvoids and the like present in the surface of the weld zone are filled with the resin, whereby the production of whiskers is suppressed and, at the same time, the smoothness of the surface of the resin covering is improved.

### EXAMPLES

### Example 1

A copper wire of 0.6 mmφ plated with lead-free tin (plating thickness 12 µm) was provided as a lead wire member, and the copper wire was cut into 20-mm length. Further, an aluminum wire of 1.2 mmφ was provided as an aluminum core wire, and the aluminum core wire was cut into 9-mm length. Subsequently, the lead wire and the aluminum core wire each cut into respective predetermined lengths were held on the electrodes of an arc welding device. In this state, the lead wire and the aluminum core wire were pressed, and welding was performed by plasma discharge (voltage about 50 V) to join the lead wire and the aluminum core wire to each other. Thereafter, the end of the aluminum core wire was pressed for flattening to form a press flattened portion. Thus, a joined body was obtained.

The resultant joined body was immersed in a washing tank containing a washing solution containing a washing agent (Fine Cleaner FC315 (produced by NIHON PARKERIZING CO., LTD.)) in a concentration of 0.2% by mass for 24 hours for washing. At this time, the used washing solution was circulated through the magnetic filter as shown in Fig. 2. For comparison, similar washing was performed without inserting the magnet of the magnetic filter. When the washing solution after washing was collected and subjected to Auger electron spectroscopic analysis, it was revealed that the following metal or ion species were contained in the solution.

**[Table 1]**

| Metal or ion species | Magnet present (mg/Kg) | Magnet absent (mg/Kg) |
|---|---|---|
| Cu | 6500 | 260 |
| Cu ion | 6200 | 250 |
| Fe | 16000 | 3900 |
| Fe ion | 13500 | 3300 |
| Aluminum | 870 | 140 |
| Aluminum ion | 780 | 128 |
| Sodium | 1000 | 1700 |
| Sodium ion | 980 | 1600 |
| Tin | 2900 | 160 |
| Tin ion | 38 | 37 |
| Bismuth | Less than 7 | Less than 5 |
| Bismuth ion | Less than 7 | Less than 5 |
| Phosphate ion | 1000 | 1200 |

As is apparent from the results shown in Table 1, it can be seen that metals, alloys or intermetallic compounds containing Fe, Cu, Sn, Al, Bi and the like have been removed by cyclic utilization of the washing solution through the magnetic filter.

Chemiseal U-426B (produced by Chemitech) containing 1.0% by mass of Fine Cleaner FC315 (produced by NIHON PARKERIZING CO., LTD.) which is an inorganic acid salt solution was provided as an ultraviolet curable resin composition. The provided ultraviolet curable resin composition was coated on the weld padding portion of the tab terminal washed in the washing tank equipped with the magnetic filter, and the coated portion was irradiated with ultraviolet light with an ultraviolet irradiation apparatus to cure the composition and thus to cover the weld padding portion with the resin.

Electrolytic capacitors were prepared using the tab terminals that had been covered with the resin by the above method. Leak current and the service life of an electrolyte were examined for the capacitors. The tab terminals were placed under a high temperature and high humidity environment (60°C × 90% RH) to perform an acceleration test (4250 hr) for whisker growth.

Further, for resin-covered tab terminals, the content of halogen in the tab terminal was determined by a method according to BS EN 14582:2007.

### Comparative Example 1

A tab terminal was prepared in the same manner as in Example 1, except that Chemiseal E-5201H (produced by Chemitech) which is an epoxy resin was used as the resin. Further, an electrolytic capacitor was prepared using this tab terminal.

### <Evaluation results>

For the tab terminals of Example 1, the results of the test on the occurrence of whiskers, the results of the test on leak current for the electrolytic capacitor and the service life of the electrolyte, and the halogen content were as shown in Table 2 below.

**[Table 2]**

| | Example 1 |
|---|---|
| Whisker acceleration test (whisker length) | 0 µm |
| Service life of electrolyte | 50 years |
| Leak current | 0 mA |
| Halogen content | 0 mg/Kg |

As is apparent from the results shown in Table 1, for the tab terminal covered with the specific ultraviolet cured resin rather than the epoxy resin, the occurrence of whiskers could have been more effectively suppressed. Further, since the ultraviolet curable resin is free from halogens such as chlorine, the service life of the electrolyte in the electrolytic capacitor is prolonged and the occurrence of leak current is suppressed.

### Description of Reference Characters

- 1: lead wire
- 2: aluminum core wire
- 3: aluminum electrode part
- 4: weld zone vicinity portion
- 5.: end of lead wire
- 6.: aluminum core wire portion
- 7.: washing tank
- 8.: washing solution
- 9.: discharge port
- 10.: introduction port
- 11.: forced circulation pump
- 12.: magnetic filter
- 13.: magnet
- 14.: dual container
- 15.: upper opening
- 16.: inflow port
- 17.: discharge port
- 18.: internal surface side of dual container
- 19.: foreign substance
- 20.: bottom surface
- 21.: drain valve
- 22.: drain

## Claims

1. A method for manufacturing a tab terminal for an electrolytic capacitor comprising: a lead wire (1) having a lead-free tin-plated surface; and an aluminum core wire (2) that has a press flattened portion (3) and is welded to the lead wire,
wherein the method comprises the steps of:
joining one end (4) of the aluminum core wire and one end (5) of the lead wire by welding to form a joined body;
washing the joined body in a washing tank (7) with a washing solution (8) containing an inorganic acid salt as a washing component;
coating a composition for an ultraviolet cured resin onto a weld zone of the washed joined body;and
irradiating the coated portion with ultraviolet light to form a covering of the ultraviolet cured resin, and
**characterized in that** the washing solution is circulated through a magnetic filter (12) in the washing
tank, and that an alloy or intermetallic compound of Fe and a metal from the group consisting of Cu, Sn, Al, Bi and Ni, which has been produced by washing of the joined body, is removed by the magnetic filter.

2. The method according to claim 1 **characterized in that** the covering is provided at a weld padding portion.

3. The method according to claim 1 or 2, **characterized in that** the ultraviolet cured resin is substantially free from a halogen.

4. The method according to any one of claims 1 to 3, **characterized in that** the ultraviolet cured resin is a copolymer resin composed mainly of a urethane acrylate and a (meth)acrylate.

5. The method according to claim 4, **characterized in that** the ultraviolet cured resin contains 45 to 55% by mass of the urethane acrylate and 35 to 45% by mass of the (meth)acrylate.

6. The method according to any one of claims 1 to 5, **characterized in that** the composition for an ultraviolet cured resin comprises an anaerobic curing accelerator.

7. The method according to any one of claims 1 to 6, **characterized in that** the composition for an ultraviolet cured resin further comprises a solvent containing an inorganic acid salt selected from the group consisting of borates, condensed phosphates, bicarbonates, carbonates, silicates, sulfates, and a mixture of them.

8. The method according to any one of claims 1 to 7, **characterized in that** an inorganic acid salt selected from the group consisting of borates, silicates, sulfates, phosphates, and a mixture of them is contained as a washing component in the washing tank.

9. A tab terminal obtained by the method according to any one of claims 1 to 8.

10. An electrolytic capacitor using the tab terminal according to claim 9.

## Patentansprüche

1. Verfahren zur Herstellung eines Flachsteckeranschlusses für einen Elektrolytkondensator, umfassend: einen Leitungsdraht (1) mit einer bleifreien verzinnten Oberfläche; und einen Aluminiumkerndraht (2), der einen flachgedrückten Abschnitt (3) aufweist und an den Leitungsdraht geschweißt ist,
wobei das Verfahren die folgenden Schritte umfasst:
ein Ende (4) des Alumiuniumkerndrahts und ein Ende (5) des Leitungsdrahts werden durch Schweißen so verbunden, dass ein verbundener Körper gebildet wird;
der verbundene Körper wird in einem Waschtank (7) mit einer Waschlösung (8), die ein anorganisches Säuresalz als eine Waschkomponente enthält, gewaschen;
ein Schweißbereich des gewaschenen verbundenen Körpers wird mit einer Zusammensetzung für ein Ultraviolett-gehärtetes Harz beschichtet; und
der beschichtete Abschnitt wird mit ultraviolettem Licht bestrahlt und so eine Beschichtung des Ultraviolettgehärteten Harzes gebildet, und
**dadurch gekennzeichnet, dass** die Waschlösung durch einen magnetischen Filter (12) in dem Waschtank zirkuliert wird und dass eine Legierung oder intermetallische Verbindung von Fe und einem Metall aus der Gruppe bestehend aus Cu, Sn, Al, Bi und Ni, die durch das Waschen des verbundenen Körpers hergestellt wurde, durch den magnetischen Filter entfernt wird.

2. Verfahren gemäß Anspruch 1, **dadurch gekennzeichnet, dass** die Beschichtung an einem Schweißfüllabschnitt vorgesehen ist.

3. Verfahren gemäß Anspruch 1 oder 2, **dadurch gekennzeichnet, dass** das Ultraviolett-gehärtete Harz im Wesentlichen frei von einem Halogen ist.

4. Verfahren gemäß mindestens einem der Ansprüche 1 bis 3, **dadurch gekennzeichnet, dass** das Ultraviolett-gehärtete Harz ein Copolymerharz ist, das hauptsächlich aus einem Urethanacrylat und einem (Meth)acrylat aufgebaut ist.

5. Verfahren gemäß Anspruch 4, **dadurch gekennzeichnet, dass** das Ultraviolett-gehärtete Harz 45 bis 55 Massen-% des Urethanacrylats und 35 bis 45 Massen-% des (Meth)acrylats enthält.

6. Verfahren gemäß mindestens einem der Ansprüche 1 bis 5, **dadurch gekennzeichnet, dass** die Zusammensetzung für ein Ultraviolett-gehärtetes Harz einen anaeroben Härtungsbeschleuniger umfasst.

7. Verfahren gemäß mindestens einem der Ansprüche 1 bis 6, **dadurch gekennzeichnet, dass** die Zusammensetzung für ein Ultraviolett-gehärtetes Harz ferner ein Lösungsmittel umfasst, das ein anorganisches Säuresalz ausgewählt aus der Gruppe bestehend aus Boraten, kondensierten Phosphaten, Hydrogencarbonaten, Carbonaten, Silikaten, Sulfaten und einer Mischung aus diesen enthält.

8. Verfahren gemäß mindestens einem der Ansprüche 1 bis 7, **dadurch gekennzeichnet, dass** ein anorganisches Säuresalz ausgewählt aus der Gruppe bestehend aus Boraten, Silikaten, Sulfaten, Phosphaten und einer Mischung aus diesen als eine Waschkomponente in dem Waschtank enthalten ist.

9. Flachsteckeranschluss, der durch das Verfahren gemäß mindestens einem der Ansprüche 1 bis 8 erhalten wurde.

10. Elektrolytkondensator, der den Flachsteckeranschluss gemäß Anspruch 9 verwendet.

## Revendications

1. Procédé pour fabriquer une borne à languette pour un condensateur électrolytique comprenant : un fil d'entrée (1) ayant une surface étamée sans plomb ; et un fil à âme en aluminium (2) qui a une partie aplatie sous presse (3) et est soudé au fil d'entrée,
lequel procédé comprend les étapes suivantes :
jonction d'une extrémité (4) du fil à âme en aluminium et d'une extrémité du fil d'entrée par soudage pour former un corps joint ;
lavage du corps joint dans une cuve de lavage (7) avec une solution de lavage (8) contenant un sel d'acide inorganique en tant que composant de lavage ;
déposition sous forme d'un revêtement d'une composition pour une résine durcie aux ultraviolets sur une zone de soudure du corps joint lavé ; et
irradiation de la partie revêtue avec une lumière ultraviolette pour former un revêtement de la résine durcie aux ultraviolets, et
**caractérisé en ce que** la solution de lavage circule à travers un filtre magnétique (12) dans la cuve de lavage, et **en ce qu'**un alliage ou un composé intermétallique de Fe et d'un métal du groupe constitué par Cu, Sn, Al, Bi et Ni, qui a été produit par lavage du corps joint, est retiré par le filtre magnétique.

2. Procédé selon la revendication 1, **caractérisé en ce que** le revêtement est disposé au niveau d'une partie de remplissage de soudure.

3. Procédé selon la revendication 1 ou 2, **caractérisé en ce que** la résine durcie aux ultraviolets est substantiellement exempte d'halogènes.

4. Procédé selon l'une quelconque des revendications 1 à 3, **caractérisé en ce que** la résine durcie aux ultraviolets est une résine de copolymère composée principalement d'un acrylate d'uréthane et d'un (méth)acrylate.

5. Procédé selon la revendication 4, **caractérisé en ce que** la résine durcie aux ultraviolets contient 45 à 55 % en masse de l'acrylate d'uréthane et 35 à 45 % en masse du (méth)acrylate.

6. Procédé selon l'une quelconque des revendications 1 à 5, **caractérisé en ce que** la composition pour une résine durcie aux ultraviolets comprend un accélérateur de durcissement anaérobie.

7. Procédé selon l'une quelconque des revendications 1 à 6, **caractérisé en ce que** la composition pour une résine durcie aux ultraviolets comprend un solvant contenant un sel d'acide inorganique choisi dans le groupe constitué par les borates, les phosphates condensés, les bicarbonates, les carbonates, les silicates, les sulfates, et un mélange de ceux-ci.

8. Procédé selon l'une quelconque des revendications 1 à 7, **caractérisé en ce qu'**un sel d'acide inorganique choisi dans le groupe constitué par les borates, les silicates, les sulfates, les phosphates, et un mélange de ceux-ci, est contenu en tant que composant de lavage dans la cuve de lavage.

9. Borne à languette obtenue par le procédé selon l'une quelconque des revendications 1 à 8.

10. Condensateur électrolytique utilisant la borne à languette selon la revendication 9.
